# EUROPEAN PATENT SPECIFICATION

(11) **EP 2 471 381 B1**
(45) Date of publication and mention of the grant of the patent: **01.05.2013**
(21) Application number: 11194481.5
(22) Date of filing: 20.12.2011
(51) Int. Cl.: A23L 1/00, A23L 1/212, A23P 1/08

(54) **A method and a plant for making layers of vegetables and the products obtained therefrom**
Verfahren und Anlage zur Erzeugung von Schichten aus Gemüse und damit erhaltene Produkte
Procédé et usine pour la fabrication de couches de légumes et les produits obtenus à partir de celles-ci

(30) Priority: 30.12.2010 IT BO20100767
(43) Date of publication of application: 04.07.2012
(73) Proprietor: Orogel Societa' Cooperativa Agricola, 47522 Cesena (Forli'-Cesena) (IT)
(72) Inventor: Fantini, Michele, 47521 CESENA (FORLI'-CESENA) (IT); Franceschini, Angelo, 47522 CESENA (FORLI'-CESENA) (IT)
(74) Representative: Bianciardi, Ezio

(56) References cited:
- DE-A1- 10 011 232
- FR-A1- 2 739 758
- GB-A- 2 457 957

## Description

This invention relates to a method and a plant for making layers of vegetables, in particular leaf vegetables.

The invention also relates to the product obtained using the aforesaid method and the plant that implements it.

Preferably, but without limiting its scope, the invention addresses a product consisting of superposed layers of vegetables.

Currently known methods and machinery for processing leaf vegetables, in particular spinach, but also other vegetables such as, for example, chicory, chards and spinach beet, rapini, lettuce and similar vegetables, involve the performance of a sequence of steps intended mainly to make single-layer deep-frozen products.

The prior art processing of the aforesaid type has major disadvantages.

The machinery used for the purpose involves cooking the leaf vegetables after they have been suitably cleaned and washed, and finally deep-freezing the product thus obtained.

Size differences between the outfeed openings of the cookers and the infeed openings of the deep freezers lead to problems of compatibility between them because the product feeding out of the cookers is too wide for the deep freezer.

The solutions adopted for this machinery to overcome the problem involve, in a first case, the use of special cookers, outside the main line, which can be adapted to the size of the deep freezers; and, in a second case, cutting the product feeding out of the cooker to reduce the width of the product so it is compatible with the deep freezer infeed opening, though that in turn means having to provide the line with as many deep freezers as there are divisions the product has been cut into.

In both cases, the costs of the machinery used rise significantly and, added to that, the dimensions and costs of the processing plant as a whole rise accordingly.

In this context, the technical purpose which forms the basis of this invention is to propose a method and a plant for making layers of leaf vegetables in such a way as to overcome the above mentioned disadvantages of the prior art.

In particular, this invention has for an aim to provide a leaf vegetable processing method and plant which allow plant costs and dimensions to be reduced.

Another aim of the invention is to provide a leaf vegetable processing method and plant which can make portions that are thicker than those obtainable from a single layer fed out of the cooker, while nevertheless enabling the layer of leaves to be cooked uniformly.

A further aim of the invention is to provide a leaf vegetable processing method and plant which make it possible to produce a vegetable product of high quality.

The technical purpose indicated and the aims specified are substantially achieved by a leaf vegetable processing method comprising the technical features described in claim 1 and/or in one or more of the claims dependent thereon.

The invention also relates to a leaf vegetable processing plant comprising the technical features described in claim 14.

Further features and advantages of the present invention are more apparent from the non-limiting description which follows of a preferred, non-limiting embodiment of a leaf vegetable processing method and plant as illustrated in the accompanying drawings, in which:
- Figure 1 is a side view showing a portion of a line forming part of a plant according to this invention;
- Figure 2 is a plan view showing a portion of a line forming part of a plant according to this invention;
- Figure 3 is a plan view showing an enlargement of an alternative embodiment of a detail A from Figure 2;
- Figure 4 is a perspective view, with some parts cut away in order to better illustrate others, of a detail of the plant according to the invention;
- Figure 4a illustrates a second bed of vegetables feeding out of the part of the plant of Figure 4 and which is cut to obtain portions consisting of three layers of the same type of vegetable;
- Figure 4b illustrates an embodiment of the three-layer portions of Figure 4a fed out of the plant;
- Figures 5 and 6 are, respectively, a side view and plan view, with some parts cut away in order to better illustrate others, of another detail of the plant according to the invention;
- Figure 7 is a perspective view, with some parts cut away in order to better illustrate others, of a detail of the plant according to a further embodiment of the invention;
- Figure 8 is a perspective view showing a product portion fed out from the part of the plant made according to the further embodiment illustrated in Figure 7.

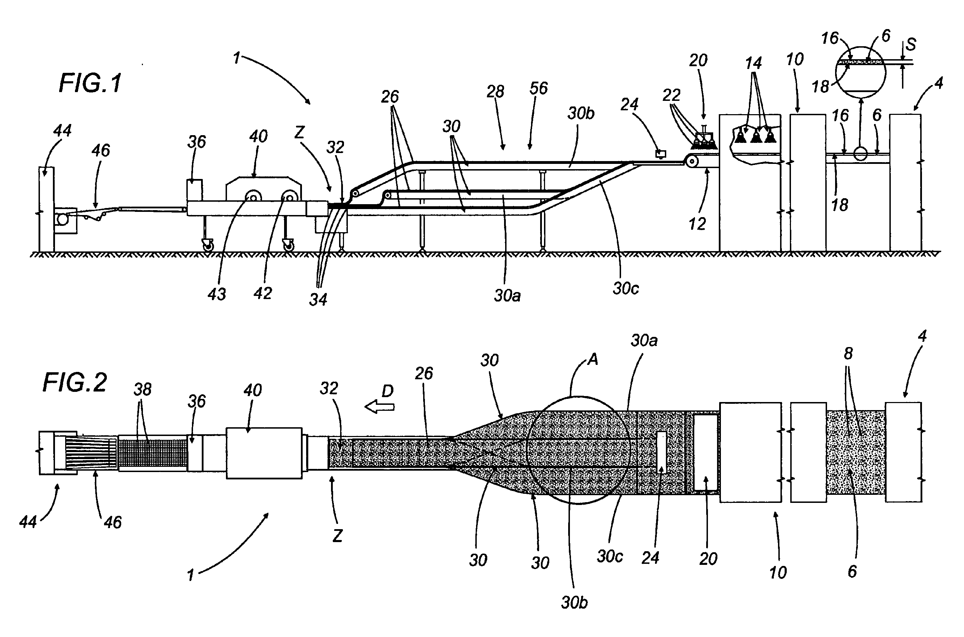

with reference to the accompanying drawings, the numeral 1 denotes a leaf vegetable processing plant. More precisely, Figures 1 and 2 illustrate a portion of a line forming part of the plant.

Upstream of the line there are means 4 for forming a first bed 6 of vegetable leaves 8 previously washed and cleaned.

The forming means 4 pick up the leaves, which are immersed in water in a washing tank, and form them into a first bed 6 consisting of superposed leaves 8 which are laid out flat and randomly arranged. The first bed 6 of leaf vegetables is then fed into at least one cooker 10 where it is subjected to a heat treatment.

More precisely, the heat treatment consists of blanching the leaves 8.

More specifically, the first bed 6 of leaves 8 enters the cooker 10 with a predetermined thickness s to guarantee uniform cooking of the leaves 8, especially the innermost one.

The cooker 10 comprises a perforated conveyor belt 12 on which the first bed 6 of leaves 8 is conveyed through the cooker 10, and a plurality of hot water or steam nozzles and/or sprayers 14 for blanching the leaves 8 using jets of hot water or steam.

The heating fluid (water or steam) is injected through nozzles and/or sprayers 14 on the top 16 and underside 18 and must reach the leaves in the centre of the layer in order to cook the first bed 6 of leaves 8 uniformly.

As it feeds out of the cooker 10, the first bed 6 of leaves 8 is cooled by cooling means 20.

The cooling means 20 comprise a plurality of cold water nozzles and/or sprayers 22 which spray the first bed 6 in such a way as to lower its temperature.

Downstream of the cooker 10 and of the cooling means 20, there are first cutting means 24 for longitudinally cutting the first bed 6 according to a feed direction D of the first bed 6 itself, thereby dividing the bed 6 into a plurality of elongate strips 26.

The elongate strips 26 are conveyed by superposing means 28, located downstream of the first cutting means 24, towards a zone Z for superposing the strips 26.

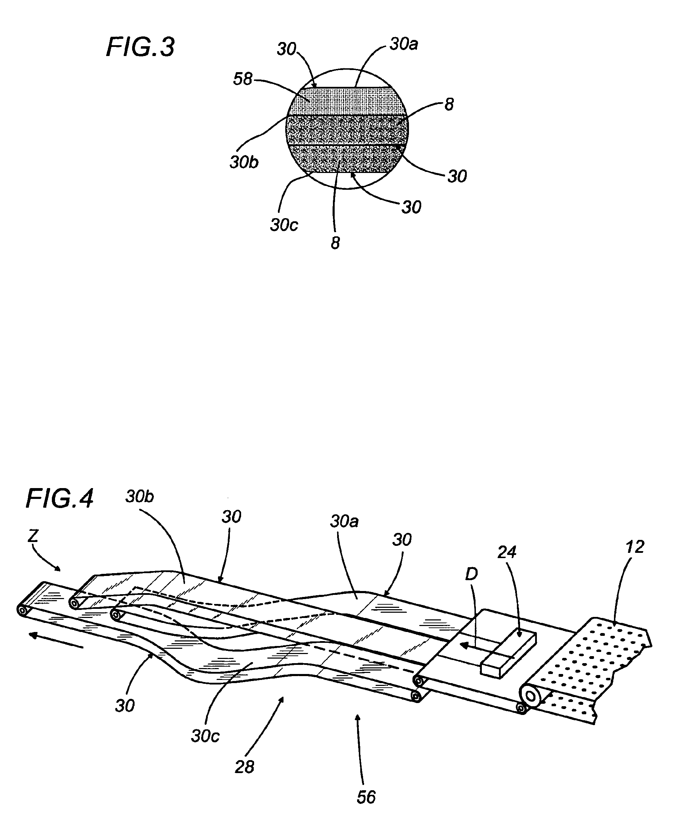

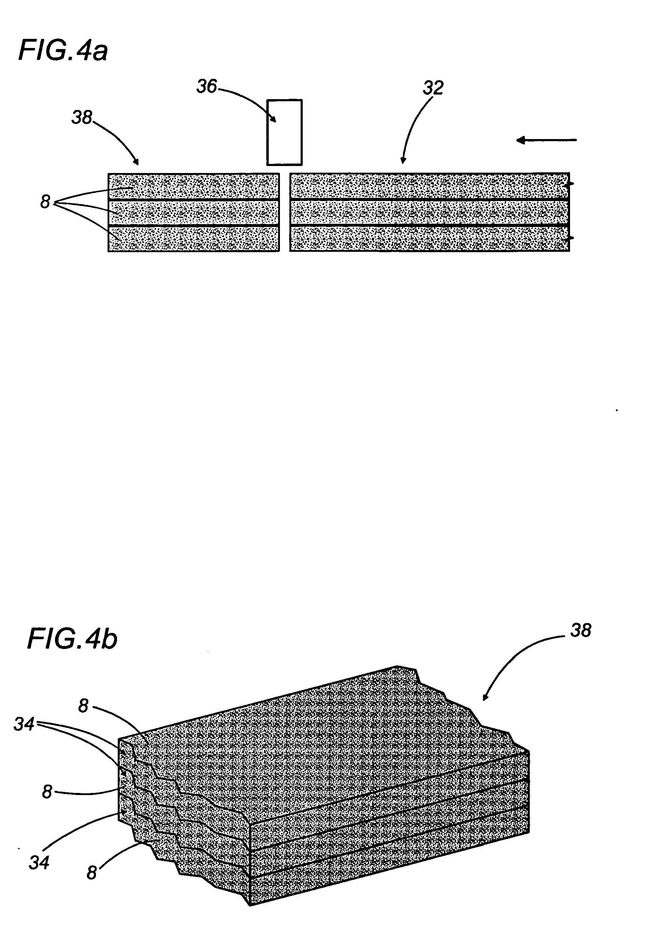

As may be seen in Figure 4, the superposing means 28 comprise a plurality of conveyor belts 30. In the embodiment illustrated, the superposing means 28 comprise a first conveyor belt 30a, a second one 30b and a third one 30c.

At the superposing zone Z, the superposing means 28 place the elongate strips 26 on top of each other.

The superposed strips 26 form a second bed 32 of vegetable leaves 8; more specifically, the second bed 32 comprises a plurality of superposed layers 34 of the first bed 6.

Preferably, the conveyor belts 30 are at least equal in number to the number of layers 34 to be made.

At the superposing zone Z, the conveyor belts 30 convey the strips 26 at different heights, in such a way that the strips 26, when they leave the respective belts 30, are placed on top of each other to form the layers 34 of the second bed 32 of vegetables.

The second bed 32 is then cut at least once by second cutting means 36 located downstream of the superposing means 28; the second cutting means 36 being adapted to divide the second bed 32 into portions 38.

The first and second cutting means 24 and 36 may consist of blades, laser beams or high pressure water jets.

As illustrated in Figure 4a, at the outfeed of the superposing means 28 and at the superposing zone Z the second bed 32 of vegetables is formed which is cut to obtain portions 38 consisting, in the embodiment illustrated in Figure 4b, of three layers 34 of the same type of vegetable.

Between the superposing means 28 and the second cutting means 36 there are water eliminating means 40 adapted to eliminate from the superposed layers 34 the excess water absorbed during blanching and subsequent cooling.

Preferably, the excess water eliminating means 40 are embodied by one or more compressing drums 42. In an alternative embodiment, the excess water eliminating means 40 are embodied by one or more compressing belts 43.

Lastly, the portions 38 are fed into at least one deep freezer 44 and deep frozen.

Preferably, the respective line comprises a single cooker 10 and a single deep freezer 44.

More specifically, upstream of the deep freezer 44 there are portion 38 spacer means 46 for spacing the portions 38 laterally and longitudinally relative to the feed direction D. Spacing the portions 38 before they are deep frozen prevents the portions 38 from being joined together again by the ice which forms around each portion 38 during deep freezing.

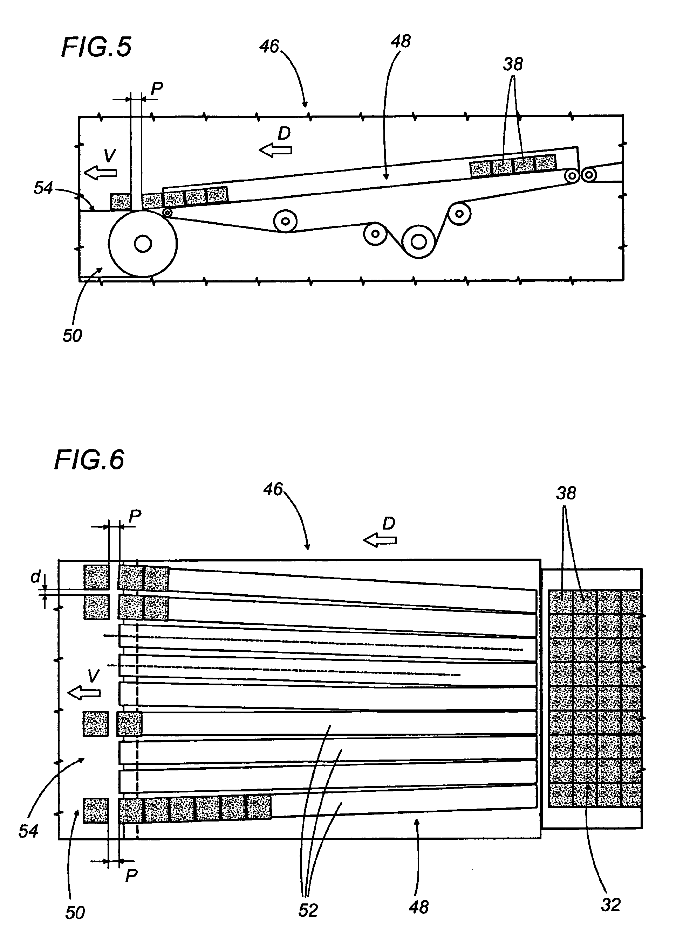

As shown in Figures 5 and 6, the spacing means 46 comprise means 48 of lateral separation and means 50 of longitudinal separation.

The means 48 of lateral separation comprise a plurality of guides or belts 52 which diverge along the feed direction D of the portions 38; the divergent guides 52 are adapted to move the portions 38 apart by a distance d transversally of the direction of feed D of the portions 38.

The means 50 of longitudinal separation comprise a separator conveyor belt 54 which imparts to the portions 38 a higher feed speed v; the feed speed v allows the portions 38 to be spaced by a spacing p relative to a direction parallel to the feed direction D.

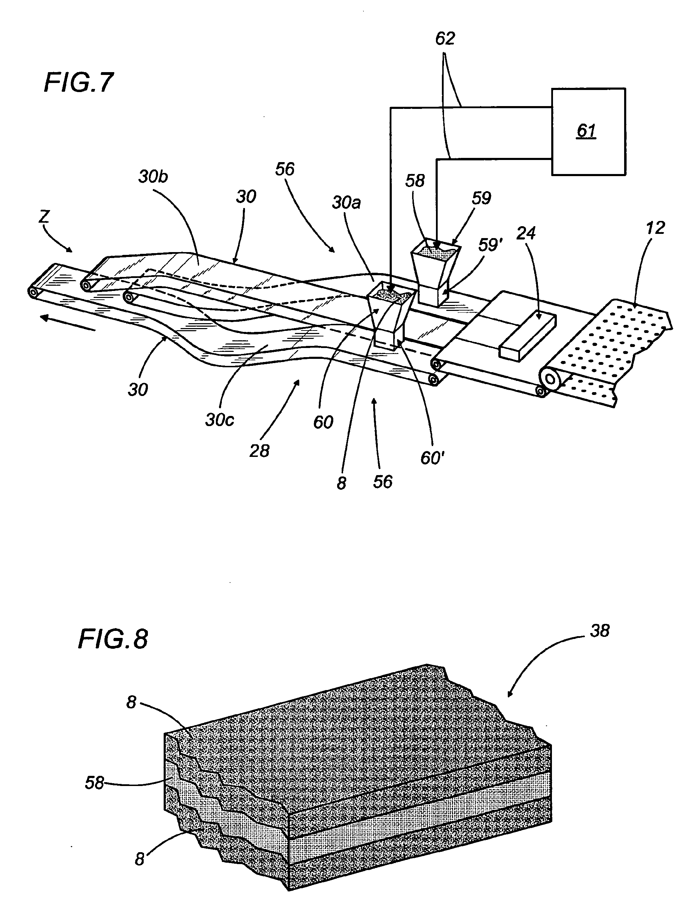

As illustrated in Figure 7, the plant 1 comprises, above the aforementioned superposing means 28 and preferably downstream of the first cutting means 24, but possibly also all the way along the feed path downstream of the cooling means 20 and upstream of the deep freezer 44, means 56 for depositing an edible product 58, for example a condiment, on the vegetable strips 26 before they are superposed and while they are being superposed to form the second bed 32 of vegetables.

In this case, when the second bed 32 is cut, the individual portions 38 obtained consist, in the embodiment illustrated in Figure 8, of two layers 8 of the same type of vegetable, with a layer of condiment 58 interposed between them.

The condiment 58 is preferably of vegetable nature, for example vegetable cubes or a leaf vegetable other than spinach. Alternatively, the condiment 58 might be of a non-vegetable nature, such as, for example, a sauce, processed cheese, or ham cubes and similar condiment products.

More precisely, in a non-limiting embodiment, the aforesaid means 56 for depositing an edible product 58 may comprise a first and a second distributor device 59, 60. The first device 59 is located above the first conveyor belt 30a and the second device 60 is located above the third conveyor belt 30c. The distributors 59, 60 are equipped with respective dispensing nozzles 59' and 60' and are supplied by a tank, schematically represented by a block 61, through a pair of pipes, schematically represented by leader lines 62.

In an alternative embodiment, means 56 for depositing an edible product 58 on the strips 26 may be embodied, in part, by the superposing means 28 themselves.

In other words, one or more of the conveyor belts 30 of the superposing means 28 not used for superposing the strips 26, might be used to convey the condiment 58 or even another type of leaf vegetable. For example, in the embodiment illustrated in Figure 3, the condiment 58 is conveyed by the first conveyor belt 30a towards the zone Z for superposing the strips 26.

The portions 38 illustrated in Figure 8 are thus obtained in accordance with what is described above.

In a further alternative embodiment, the portions 38 might consist of layers of different types of food. This might be done by loading into the cooker 10 products of different types, kept separate in longitudinal strips of the same width as the conveyor belts 30. In that case, the belts would superpose leaf vegetables of different kinds, thus making vegetable mixes.

The invention described above makes it possible to obtain a product that is easy to use and has a high standard of quality.

Moreover, in another embodiment which is not illustrated but which is easily inferable from the one that is illustrated, it is possible to make portions 38 consisting of layers of different types of foods, where the layers of condiment 58 or the layers of leaf vegetables of a type different from that of the base layer can be provided also on the outer surfaces of the portions, above and/or below the inner layers.

Lastly, according to another embodiment that is not illustrated, the portions 38 may also be cylindrical in shape, in which case the cutting means 36 will move according to a circular path. Further, the plant for the production of this type of product uses machines such as cookers and deep freezers of customary type, without having to resort to special constructional designs.

Moreover, it is possible to reduce the number of cookers and deep freezers used, thereby advantageously limiting overall dimensions, as well as plant and production costs.

## Claims

1. A method for making layers of vegetables, comprising the following steps:
forming a first uniform bed (6) of vegetable leaves (8) which are laid out flat and randomly superposed;
subjecting the first bed (6) of vegetables to a heat treatment;
dividing the first bed (6) of heat treated vegetables longitudinally relative to the feed direction (D) to form a plurality of elongate strips (26);
superposing the strips (26) over each other to form a second bed (32) composed of a plurality of superposed layers (34) of the first bed (6);
cutting the superposed layers (34) to form the second bed (32) into portions (38);
deep-freezing the portions (38).

2. The method according to claim 1 **characterized in that** the step of subjecting the first bed (6) of vegetables to a heat treatment comprises blanching the first bed (6) using jets of hot water and/or steam.

3. The method according to either of the preceding claims, **characterized in that** during the step of forming the first bed (6) of vegetables, the first bed (6) is given a predetermined thickness (s).

4. The method according to any of the preceding claims, **characterized in that** it comprises a step of cooling the first bed (6) of vegetables, using a plurality of cold water sprayers (22) after having subjected the first bed (6) to heat treatment.

5. The method according to any of the preceding claims, **characterized in that** it comprises a step of compressing the second bed (32) to eliminate the excess water before the step of cutting into portions (38).

6. The method according to any of the preceding claims, **characterized in that** the steps of dividing the first bed (6) into strips (26) and cutting the second bed (32) into portions (38) are accomplished using blades and/or laser beams and/or high pressure water jets.

7. The method according to any of the preceding claims **characterized in that** the step of superposing the strips (26) comprises using a plurality of conveyor belts (30).

8. The method according to claim 7 **characterized in that** the conveyor belts (30) are at least equal in number to the number of layers (34) to be made.

9. The method according to any of the preceding claims, **characterized in that** it comprises a step of depositing at least one edible product (58) on at least one strip (26) during the step of superposing the strips (26) themselves.

10. The method according to any of the preceding claims, **characterized in that** it comprises a step of depositing at least one edible product (58) on at least one strip (26) at a zone downstream of the cooling means (20) and upstream of the deep freezer (44).

11. The method according to claim 10, **characterized by** depositing at least one edible product (58) of vegetable nature.

12. The method according to claim 10 or 11, **characterized by** depositing at least one edible product (58) of non-vegetable nature.

13. The method according to any of the preceding claims, **characterized in that** it comprises a step of spacing the portions (38) from each other prior to the step of deep freezing the portions (38).

14. A plant for making layers of vegetables comprising at least one feed line for feeding the leaf vegetable along a path;
the respective feed line comprising:
means (4) for forming a first bed (6) of vegetable leaves (8) which are laid out flat and randomly superposed;
at least one cooker (10) for heat treating the first bed (6) of vegetables;
means (20) for cooling the first, heat treated bed (6) of vegetables;
first cutting means (24), located downstream of the cooling means (20), for longitudinally cutting the first bed (6) of vegetables into a plurality of elongate strips (26) according to the direction (D) of feeding the vegetable leaves (8);
second cutting means (36) for cutting the plurality of elongate strips (26) into portions (38);
at least one deep freezer (44) for deep freezing the portions (38); **characterized in that** it comprises superposing means (28), located upstream of the second cutting means (36), for superposing the plurality of elongate strips (26) to form a second bed (32) comprising a plurality of superposed layers (34) of the first bed (6); and spacing means (46), located upstream of the deep freezer (44), for spacing the portions (38) from each other laterally and longitudinally.

15. A product obtainable with the method according to claims 1 to 13, comprising a plurality of superposed layers (34) of vegetable leaves (8) laid out flat and at least one edible product (58) in contact with at least one of the layers (34).

16. The product according to claim 15, **characterized in that** it comprises a plurality of superposed layers of vegetable leaves (8) laid out flat, with a layer of other edible products (58) interposed between one layer and another and/or placed on the first and on the last layer.

## Patentansprüche

1. Verfahren zur Erzeugung von Schichten aus Gemüse, umfassend die folgenden Schritte:
Bildung eines ersten gleichmäßigen Betts (6) aus Gemüseblättern (8), die flach und zufällig übereinanderliegend angeordnet werden;
Unterziehen des ersten Gemüsebetts (6) einer Wärmebehandlung;
longitudinale Unterteilung des ersten Betts (6) wärmebehandelten Gemüses relativ zur Vorschubrichtung (D) zur Bildung einer Vielzahl von länglichen Streifen (26);
Übereinanderlegen der Streifen (26) zur Bildung eines zweiten Betts (32), das aus einer Vielzahl von übereinanderliegenden Schichten (34) des ersten Betts (6) besteht;
Schneiden der übereinanderliegenden Schichten (34) zur Bildung von Portionen (38) aus dem zweiten Bett (32);
Tiefkühlen der Portionen (38).

2. Verfahren nach Anspruch 1, **dadurch gekennzeichnet, dass** der Schritt des Unterziehens des ersten Gemüsebetts (6) einer Wärmebehandlung das Blanchieren des ersten Betts (6) mithilfe von Heißwasser- und/oder Dampfstrahlen umfasst.

3. Verfahren nach einem der vorangehenden Ansprüche, **dadurch gekennzeichnet, dass** während des Schritts der Bildung des ersten Gemüsebetts (6) das erste Bett (6) eine festgelegte Dicke (s) erhält.

4. Verfahren nach einem der vorangehenden Ansprüche, **dadurch gekennzeichnet, dass** es einen Schritt des Kühlens des ersten Gemüsebetts (6) mithilfe einer Vielzahl von Kaltwassersprühern (22) umfasst, nachdem das erste Bett (6) der Wärmebehandlung unterzogen wurde.

5. Verfahren nach einem der vorangehenden Ansprüche, **dadurch gekennzeichnet, dass** es einen Schritt des Komprimierens des zweiten Betts (32) zum Entfernen des überschüssigen Wassers vor dem Schritt des Schneidens in Portionen (38) umfasst.

6. Verfahren nach einem der vorangehenden Ansprüche, **dadurch gekennzeichnet, dass** die Schritte der Unterteilung des ersten Betts (6) in Streifen (26) und des Schneidens des zweiten Betts (32) in Portionen (38) mithilfe von Klingen und/oder Laserstrahlen und/oder Hochdruckwasserstrahlen erreicht wird.

7. Verfahren nach einem der vorangehenden Ansprüche, **dadurch gekennzeichnet, dass** der Schritt des Übereinanderlegens der Streifen (26) die Verwendung einer Vielzahl von Förderbändern (30) umfasst.

8. Verfahren nach Anspruch 7, **dadurch gekennzeichnet, dass** die Anzahl der Förderbänder (30) mindestens der Anzahl von zu erzeugenden Schichten (34) entspricht.

9. Verfahren nach einem der vorangehenden Ansprüche, **dadurch gekennzeichnet, dass** es einen Schritt des Aufsetzens mindestens eines essbaren Produkts (58) auf mindestens einen Streifen (26) während des Schritts des Übereinanderlegens der Streifen (26) umfasst.

10. Verfahren nach einem der vorangehenden Ansprüche, **dadurch gekennzeichnet, dass** es einen Schritt des Aufsetzens mindestens eines essbaren Produkts (58) auf mindestens einen Streifen (26) in einer Zone umfasst, die den Kühlmitteln (20) nachgelagert und dem Tiefkühler (44) vorgelagert ist.

11. Verfahren nach Anspruch 10, **gekennzeichnet durch** das Aufsetzen mindestens eines essbaren Produkts (58) pflanzlicher Natur.

12. Verfahren nach Anspruch 10 oder 11, **gekennzeichnet durch** das Aufsetzen mindestens eines essbaren Produkts (58) nicht-pflanzlicher Natur.

13. Verfahren nach einem der vorangehenden Ansprüche, **dadurch gekennzeichnet, dass** es einen Schritt der Beabstandung der Portionen (38) voneinander vor dem Schritt des Tiefkühlens der Portionen (38) umfasst.

14. Anlage zur Erzeugung von Schichten aus Gemüse, umfassend mindestens eine Vorschublinie zum Vorschub des Blattgemüses entlang einer Bahn;
wobei die jeweilige Vorschublinie Folgendes umfasst:
Mittel (4) zur Bildung eines ersten Betts (6) aus Gemüseblättern (8), die flach und zufällig übereinanderliegend angeordnet werden;
mindestens einen Kocher (10) zur Wärmebehandlung des ersten Gemüsebetts (6);
Mittel (20) zum Kühlen des ersten wärmebehandelten Gemüsebetts (6);
erste Schneidemittel (24), die den Kühlmitteln (20) nachgelagert liegen, zum longitudinalen Schneiden des ersten Gemüsebetts (6) in eine Vielzahl von länglichen Streifen (26) gemäß der Richtung (D) des Vorschubs der Gemüseblätter (8);
zweite Schneidemittel (36) zum Schneiden der Vielzahl von länglichen Streifen (26) in Portionen (38);
mindestens einen Tiefkühler (44) zum Tiefkühlen der Portionen (38); **dadurch gekennzeichnet, dass** sie den zweiten Schneidemitteln (36) vorgelagerte Überlagerungsmittel (28) zum Übereinanderlegen der Vielzahl von länglichen Streifen (26) zur Bildung eines zweiten Betts (32), umfassend eine Vielzahl von übereinanderliegenden Schichten (34) des ersten Betts (6); und dem Tiefkühler (44) vorgelagerte Beabstandungsmittel (46) zur lateralen und longitudinalen Beabstandung der Portionen (38) voneinander umfasst.

15. Produkt, das mit dem Verfahren nach den Ansprüchen 1 bis 13 erhaltbar ist, umfassend eine Vielzahl von übereinanderliegenden Schichten (34) aus flach angelegten Gemüseblättern (8), und mindestens ein essbares Produkt (58), das in Kontakt mit mindestens einer der Schichten (34) ist.

16. Produkt nach Anspruch 15, **dadurch gekennzeichnet, dass** es eine Vielzahl von übereinanderliegenden Schichten aus flach angelegten Gemüseblättern (8) mit einer Schicht anderer essbarer (58) Produkte, die zwischen einer Schicht und einer anderen liegen und/oder auf der ersten und auf der letzten Schicht platziert sind, umfasst.

## Revendications

1. Un procédé pour la fabrication de couches de légumes, comprenant les étapes suivantes :
former un premier lit uniforme (6) de feuilles de légumes (8) qui sont étalées à plat et superposées au hasard ; soumettre le premier lit (6) de légumes à un traitement thermique ;
partager le premier lit (6) de légumes, ayant subi le traitement thermique, longitudinalement par rapport à la direction d'alimentation (D) pour former une pluralité de bandes allongées (26) ;
superposer les bandes (26) l'une sur l'autre pour former un second lit (32) composé d'une pluralité de couches superposées (34) du premier lit (6) ;
couper les couches superposées (34) pour former le second lit (32) en portions (38) ;
surgélation des portions (38).

2. Procédé selon la revendication 1 **caractérisé en ce que** l'étape de soumettre le premier lit (6) de légumes à un traitement thermique comprend le blanchissement du premier lit (6) en utilisant des jets d'eau chaude et/ou de vapeur.

3. Procédé selon l'une quelconque des revendications précédentes, **caractérisé en ce que** durant l'étape de former le premier lit (6) de légumes, le premier lit (6)a une épaisseur prédéterminée (s).

4. Procédé selon l'une quelconque des revendications précédentes, **caractérisé en ce qu'**il comprend une étape de refroidir le premier lit (6) de légumes, utilisant une pluralité de pulvérisateurs d'eau froide (22) après avoir soumis le premier lit (6) à un traitement thermique.

5. Procédé selon l'une quelconque des revendications précédentes, **caractérisé en ce qu'**il comprend une étape de compresser le second lit (32) pour éliminer l'eau en excès avant l'étape de couper en portions (38).

6. Procédé selon l'une quelconque des revendications précédentes, **caractérisé en ce que** les étapes de subdiviser le premier lit (6) en bandes (26) et de couper le second lit (32) en portions (38) sont accomplies en utilisant des lames et/ou des faisceaux laser et/ou des jets d'eau haute pression.

7. Procédé selon l'une quelconque des revendications précédentes, **caractérisé en ce que** l'étape de superposer les bandes (26) comprend l'utilisation d'une pluralité de tapis transporteurs (30).

8. Procédé selon la revendication 7 **caractérisée en ce que** le nombre des tapis transporteurs (30) est au moins égal au nombre de couches (34) à réaliser.

9. Procédé selon l'une quelconque des revendications précédentes, **caractérisé en ce qu'**il comprend une étape de déposer au moins un produit comestible (58) sur au moins une bande (26) durant l'étape de superposer les bandes (26).

10. Procédé selon l'une quelconque des revendications précédentes, **caractérisé en ce qu'**il comprend une étape de déposer au moins un produit comestible (58) sur au moins une bande (26) au niveau d'une zone en aval du moyen de refroidissement (20) et en amont du surgélateur.

11. Procédé selon la revendication 10, **caractérisé par** le dépôt d'au moins un produit comestible (58) de nature végétale.

12. Procédé selon la revendication 10 ou 11, **caractérisé par** le dépôt d'au moins un produit comestible (58) de nature non végétale.

13. Procédé selon l'une quelconque des revendications précédentes, **caractérisé en ce qu'**il comprend une étape d'espacer les portions (38) l'une par rapport à l'autre avant l'étape de surgélation des portions (38).

14. Usine pour la fabrication de couches de légumes comprenant au moins une ligne d'alimentation pour alimenter les légumes en feuille le long d'une trajectoire ;
la ligne d'alimentation respective comprenant :
un moyen (4) pour former un premier lit (6) de feuilles de légumes (8) qui sont étalés à plat et superposées au hasard ;
au moins un autocuiseur (10) pour soumettre le premier lit (6) de légumes au traitement thermique ;
un moyen (20) pour refroidir le premier lit (6) de légumes soumis au traitement thermique ;
premier moyen de découpe (24), situé en aval du moyen de refroidissement (20), pour couper longitudinalement le premier lit (6) de légumes en une pluralité de bandes allongées (26) selon la direction (D) d'alimentation des feuilles de légume (8) ;
second moyen de découpe (36) pour couper la pluralité de bandes allongées (26) en portions (38) ;
au moins un surgélateur (44) pour la surgélation des portions (38) ; **caractérisé en ce qu'**il comprend un moyen de superposition (28), situé en amont du second moyen de découpe (36), pour superposer la pluralité de bandes allongées (26) pour former un second lit (32) comprenant une pluralité de couches superposées (34) du premier lit (6) ; et un moyen d'espacement (46), situé en amont du surgélateur (44), pour espacer les portions (38) l'une par rapport à l'autre latéralement et longitudinalement.

15. Produit pouvant être obtenu avec le procédé selon les revendications 1 à 13, comprenant une pluralité de couches superposées (34) de feuilles de légumes (8) étalées à plat et au moins un produit comestible (58) au contact d'au moins une des couches (34).

16. Produit selon la revendication 15, **caractérisé en ce qu'**il comprend une pluralité de couches superposées de feuilles de légumes (8) étalées à plat, avec une couche d'autres produits comestibles (58) interposés entre deux couches et/ou placés sur la première et la dernière couche.
